# EUROPEAN PATENT SPECIFICATION

(11) **EP 3 393 252 B1**
(45) Date of publication and mention of the grant of the patent: **24.02.2021**
(21) Application number: 15816196.8
(22) Date of filing: 23.12.2015
(51) Int. Cl.: A21D 2/18, A21D 8/04, A21D 10/02, A21D 13/02, A21D 10/00

(54) **DOUGH MIXTURE COMPRISING PARTICLES COMPRISED OF STARCH FOR THE PRODUCTION OF BAKERY PRODUCTS WITH AN OPEN CRUMB STRUCTURE**
TEIGMISCHUNG MIT PARTIKELN AUS STÄRKE ZUR HERSTELLUNG VON BACKWAREN MIT OFFENER KRUMENSTRUKTUR
PÂTE COMPRENANT DES PARTICULES CONTENANT DE L'AMIDON POUR LA PRODUCTION DE PRODUITS DE BOULANGERIE PRÉSENTANT UNE MIE À STRUCTURE OUVERTE

(43) Date of publication of application: 31.10.2018
(73) Proprietor: Sonneveld Group B.V., 3356 LJ Papendrecht (NL)
(72) Inventor: WEEGELS, Peter Louis, 6865 CC Doorwerth (NL)
(74) Representative: van Kooij, Adriaan
(86) International application number: PCT/EP2015/081164
(87) International publication number: WO 2017/108131

(56) References cited:
- EP-B1- 1 119 345
- WO-A1-01/25414
- WO-A1-2013/175119
- US-A1- 2012 207 881

## Description

The present invention relates to bakery products with an open crumb structure. The present invention further relates to methods for the production of bakery products with an open crumb structure and bakery products obtainable by this method.

The structure of bread largely determines the sensory properties, and thus the consumer appreciation of bakery products. Often, a fine structure is desired because this gives a soft mouthfeel. There are also products with an open crumb structure which consumers appreciate as ciabatta, traditional French baguettes and sourdough bread.

The structure and type of bread that is being produced is determined by its dough. Dough is generally made by mixing flour with a small amount of water and sometimes includes yeast or other leavening agents, salt as well as other ingredients such as various fats, emulsifiers, enzymes or flavorings. A wide variety of bakery products can be produced, depending on the process of making and shaping dough, like breads and bread-based items, but also biscuits, cakes, cookies, dumplings, flatbreads, noodles, pasta, pastry, pizza, piecrusts, etc. Doughs are made from a wide variety of flours, commonly wheat but also other flours made from maize, rice, rye, legumes, almonds, and other cereals and crops can be added.

The production process of bakery products starts with the mixing of the raw materials including water and flour to obtain dough. Mixing occurs until the dough has a smooth appearance. Mixing has two functions: to evenly distribute the various ingredients and allow the development of a protein (gluten) network to give the best bread possible. Then the dough is fermented, "proofing of the dough", at proofing temperature, followed by pressing of the dough to release any large gas holes that may have formed during proofing, to release excess gas and to redistribute gas bubbles. Then the dough is molded into the desired bakery product shape. During the final proofing the bakery product fills with more bubbles of gas, and once this has proceeded far enough they are transferred to a preheated oven for baking. Such a high heat will kill the yeast, thus stopping its process of proofing rising and growth. Finally the bakery product is cooled to about 35°C before slicing. In large scale production of bakery products, the steps of mixing, kneading, baking and slicing are performed by industrial equipment suitable for processing. In view of the complexity, seamless processing is prerequisite. The dough properties on current production lines are of key importance to guarantee continuous processing. Excess water in the dough or water release during proofing due to the enzymatic action or a dough mixing that is not optimal are the main causes of dough stickiness. Stickiness of dough is the main cause of interruption of the production process, whether it is during dividing, rounding, proofing or molding.

US2012/0207881 describes a method for preparing a dough product, including bakery products such as a bread, comprising mixing water, non-pelletized flour and one or more pellets to form a dough and heating the dough. The pellets comprise pelletized flour and an active ingredient chosen from the group consisting of flavour compounds, nutritional compounds, preservatives, vitamins, minerals, colouring agents, enzymes and mixtures thereof. The method provides a dough product having an increased taste intensity and improved flavour regarding a specific ingredient added.

EP1119345 describes a method for encapsulating or embedding a component (e.g. enzyme) in a matrix for producing discrete, particulate, shelf-stable encapsulated heat-sensitive components from solutions or dispersions of the component. The products of may be in the form of discrete particles, pellets, or tablets and the encapsulated products of the present invention may be incorporated into foods intended for human or animal consumption such as baked goods, for example, bread, wafers, cookies, crackers, pretzels, pizza, and rolls.

WO01/25414 also describes a method for encapsulating or embedding a component in a matrix to obtain a formable, extrudable, cuttable mixture or dough by mixing ingredients comprising at least one plasticizable matrix material, a liquid plasticizer, an encapsulant, a non-plasticizable matrix component and at least one component for controlling the rate of release of the encapsulant.

WO2013/175119 describes breads enriched in fiber by addition in the dough of extruded beads or pellets comprising bran, wheat middlings and flour. The addition of the beads to the dough allows to prepare products which have improved nutritional value, without compromising taste, texture and microbial quality, as would be the case when whole meal cereal (e.g., whole meal wheat) is used.

The production process of bakery products with an open crumb structure is characterized in the fact that the dough recipe contains a lot of water (70% on flour basis, or more), and that it requires very long proofing of the dough of preferentially 3 hours or longer. This makes the production process of bakery products with an open crumb structure less economical and more time consuming compared to the "regular" bakery types. For the production of regular bakery types, less time is required for proofing of the dough, typically 45 minutes up to 2 hours.

Furthermore, because of the lower water content of regular bakery types, 50% to 65% based on the flour weight, the dough is also simpler and cheaper to process. Doughs having higher water content, like the dough of bakery products with an open crumb structure, are very sticky and consequently require the use of lots of dusting flour or oil during processing to prevent sticking of the dough to the machines and processing lines. Because of the sticky properties limited types of equipment are suitable for processing these doughs having higher water content.

Considering the above, there is a need in the art for dough of bakery products with an open crumb structure that is simpler and cheaper to process. Furthermore there is a need in the art for a production method of bakery products with an open crumb structure that is more economical and time consuming.

It is an object of the present invention, amongst other objects, to address the above need in the art. The object of present invention, amongst other objects, is met by the present invention as outlined in the appended claims.

Specifically, the above object, amongst other objects, is met, according to a first aspect, by the present invention by bakery products with an open crumb structure according to claim 1 comprising a dough mixture that comprises particles comprised of starch or starch derived products, wherein said particles comprised of starch or starch derived products have a particle size of 3 mm to 5 mm. Surprisingly, it has been found that the addition of particles comprised of starch or starch derived products to dough, results in the generation of an open structure without the requirement of a long proofing time of the dough. The bakery product is baked under normal water additions, under regular baking conditions and times, depending on the specific bakery product.

The open crumb structure of the bakery products has a porosity of at least 10% coarse cell volume over the total volume of the bakery food. To determine the coarse cell volume a C-Cell was used. The C-Cell is a food structure image analysis instrument that enables food manufacturers to evaluate aerated food by taking a sample snapshot, for example a slice of bread so that the internal or external features can be analysed for information on its cellular structure, such as size, shape and location of cells.

The dough mixture comprises 50 weight% to 65 weight% (on flour weight; ofw) of water, preferably 52 weight% to 60 weight% (ofw), more preferably 54 weight% to 58 weight% (ofw), most preferably 55 weight% to 57 weight% (ofw). Baker's percentage (also known as baker's math) is a baker's notation used in the art indicating the flour-relative proportion of an ingredient used when producing bakery products as based on flour weight (ofw). In using baker's percentage, each ingredient in a formula is expressed as a percentage of the flour weight, wherein the flour weight is expressed as 100%. In the present context, when baker's percentages are used according to present invention, this will be indicated by the "ofw" phrase. Dough with such percentages of water content is much less sticky than the dough used for bakery products with an open crumb structure, that have a higher water content of 70% (ofw) or higher.

According to the present invention the particles comprised of starch or starch derived products have a particle density of between 60 g/L to 90 g/L. In extrusion, the particle density can be adjusted with water and/or fat. Increasing the water/fat content can increases the density up to 300 g/L. It is important to prevent that the particles dissolve into the dough mixture. There is a tendency of obtaining a more open structure of the bakery product when particle densities are higher and when the particles are added at the beginning of mixing of the dough. When the particles are larger, or when the particles comprised of starch or starch derived products are added at the end of after mixing of the dough, the structure is also more open.

The dough mixture comprises 2 weight% (ofw) to 15 weight% (ofw) of the particles comprised of starch or starch derived products, preferably 4 weight% (ofw) to 12 weight% (ofw), more preferably 5 weight% (ofw) to 10 weight% (ofw), most preferably 6 weight% (ofw)to 8 weight% (ofw).

According to another preferred embodiment of the present invention the particles comprised of starch or starch derived products are selected from grits, grain or cereals. The particles comprised of starch or starch derived products can for instance be flour, grits, whole grains or cereals/pseudo-cereals, such as wheat, rice, buckwheat, oat, rye, maize, teff, quinoa, etc. Preferably, according to present invention, the particles comprised of starch or starch derived products are comprised of wheat and/or maize.

According to yet another preferred embodiment of the present invention the particles comprised of starch or starch derived products are comprised of enzymes, preferably amylases, more preferably heat stable endo-amylases, and/or oils and/or fats. These enzymes, oils and/or fats can be added to make the structure of the crumb even more open. In addition, the main function of amylase in particles is to break down complex starches into simple sugars. This reduces the viscosity of the starch in the particles and thus enlarges the gas cells further during proofing and baking.

The present invention, according to a second aspect, relates to a method for the production of the above-mentioned bakery products with an open crumb structure, according to claim 6, wherein the methods comprises the following steps
a) providing the dough mixture wherein said dough mixture comprises 50 weight % to 65 weight% (ofw) of water, and said dough mixture comprises particles comprised of 2 weight% to 15 weight% (ofw) starch or starch derived products, wherein said particles comprised of starch or starch derived products have a particle size of 3 mm to 5mm, and a particle density of between 60 g/L to 90 g/L ;
b) mixing the particles present in said dough mixture providing a homogenous dough mixture comprised of intact starch or starch derived products;
c) proofing of the homogenous dough mixture for 15 to 120 minutes, providing a proofed dough mixture;
d) baking of the proofed dough mixture in order to obtain a bakery food.

Mixing of the particles comprised of starch or starch derived products through the dough mixture (step b), needs to be done with care. It is important that the expanding substances do not get damaged during the mixing process, such that the expanding properties of the particles are negatively affected. This will in turn affect the open crumb structure of the bakery product obtained in the process.

According to another preferred embodiment of the present method, the particles comprised of starch or starch derived products are expanded by extrusion, gun puffing, vacuum expansion, or microwave heating, preferably by extrusion.

The present invention will be further detailed in the following examples and figures wherein:

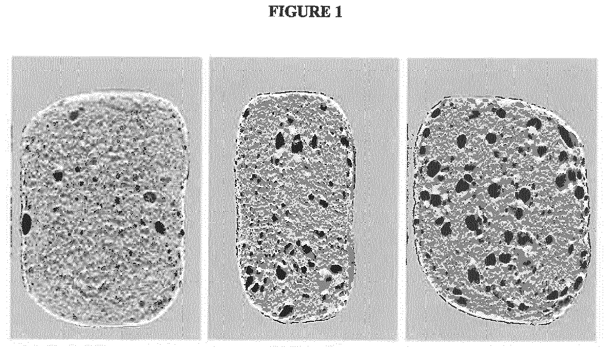

- **Figure** 1:: Shows ciabatta bread produced according to the process described in example 2. The left and middle figures show ciabatta bread produced in the short and long process respectively with a common dough mixture, the right figure shows ciabatta bread produced in the short process with the dough mixture according to the present invention, resulting in a open crumb structure of the bread;

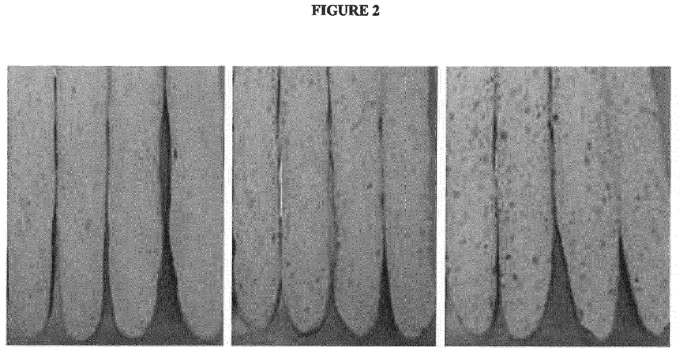

- **Figure** 2:: Shows French baguettes produced according to the process described in example 4. The left figure shows the baguettes produced with common dough. The middle and right figure show the baguettes produced from with the dough mixture according to the present invention, resulting in a open crumb structure of the bread, in which the wheat extrudates were mixed in before (middle) or at the end of the mixing of the dough (right).

### Example 1

Water was added to wheat grits to obtain a water level of 18% and extruded in a single screw extruder, with a die with openings of 1.4 mm. The cutter was adjusted to obtain an extrudate size of 3 to 5 mm. Depending on the extruder conditions, densities can be obtained between 60 and 90 g/L. Increasing the water content increased the density up to 300 g/L. The density of the extrudates is not an essential feature when they are mixed at the final stage of mixing, but there is a tendency of obtaining a more open structure of the dough mixture at higher densities, when the extrudates are added at the beginning of mixing.

### Example 2

### Ciabatta

Ciabattas were prepared according to two different processes using the following recipe:

| | |
|---|---|
| Flour (+ Vitason Ciabatta Rye) | 100% |
| Yeast | 5% (ofw) |
| Rapeseed oil | 5% (ofw) |
| Water | 54% (ofw) (short process) |
| Water | 71% (ofw) (long process) |

In the references of fast and long process no wheat extrudates were added. In the fast process the extrudate (7% ofw) was added at the end of mixing and mixed for another 180 turns.

### 1. Short process

a. Mixing in a Diosna spiral mixer 280 turns slow and 1400 turns fast + 180 turns when extrudates were added.
b. Direct sheeting of the dough in a sheeter, position 15 mm
c. Cutting squares out of the dough and position on a perforated baking plate
d. Proofing for 50 min at 32°C at 70% relative humidity
e. Baking in a Miwe Deck oven for 30 min at 230-220°C top and 220-210°C bottom temperature with steam at the start

### 2. Long process

a. Mixing in a Diosna spiral mixer 280 turns slow and 2000 turns fast, while washing in the last part of the dough water.
b. 140 min bulk proof at 22°C; after 35 min folding of the dough in three
c. Sheeting of the dough in a sheeter, position 15 mm
d. Cutting squares out of the dough and position on a perforated baking plate
e. Proofing for 20 min at 32°C at 70% relative humidity
f. Baking in a Miwe Deck oven for 30 min at 230-220°C top and 220-210°C bottom temperature with steam at the beginning

After 24 h the breads were cut horizontally at a height of 12 mm and placed in a C-Cell device (C-Cell Mono Food Imaging System, Calibre Control International Ltd.) to assess the crumb properties. Three replicates were measured. Examples of the acquired images are found in Figure 1. C-Cell provided the following relevant parameters (Table 1).

**Table 1. C-Cell values for number of holes and coarse cell volume.**

| **Wheat extrudate (% ofb)** | **Process** | **Number of holes/cm²** | **Coarse cell volume %** |
|---|---|---|---|
| 7% | short | 0.062 | 17.6% |
| 0% | short | 0.015 | 8.4% |
| 0% | long | 0.063 | 17.0% |

From experience the current invention can provide a similar number of holes as the long process and has an increased coarse cell volume. The number of holes that is obtained according to the present invention is larger than 0.025 holes/cm² and typically between 0.04 and 0.09 holes/cm². The coarse cell volume obtained according to the present invention is larger than 10% of the area and typically between 10 and 20% of the area.

### Example 3

### Ciabatta water levels

To investigate the effect of water level, ciabattas were prepared according to the following recipe:

| | |
|---|---|
| Flour (+Vitason Ciabatta Rye) | 100% |
| Yeast | 5% (ofw) |
| Rapeseed oil | 5% (ofw) |
| Water | 60% (ofw) or 70% (ofw) (not according to the invention) |

The extrudate (7% ofw) was added before mixing or at the end of mixing and mixed for another 180 turns
a. Mixing in a Diosna spiral mixer 280 turns slow and 1400 turns fast + 180 turns when extrudates were added.
b. Bulk proof for 20 min at ambient temperature
c. Sheeting of the dough in a sheeter, position 15 mm
d. Cutting squares out of the dough and position on a perforated baking plate
e. Proofing for 40 min at 32°C at 70% relative humidity
f. Baking in a Miwe Deck oven for 30 min at 230-220°C top and 220-210°C bottom temperature with steam at the beginning

After cooling for 2 h the ciabattas were cut horizontally. No differences were observed in the open structure between the doughs with 60 or 70% water (ofw). Therefore the effect of open structure is not affected by the water content of the dough. Mixing the extrudates at the end of mixing gave the best results.

### Example 4

### French Baguettes

French baguettes were prepared using the following recipe:

| | |
|---|---|
| Flour | 100% |
| Yeast | 3.5% (ofw) |
| Proson Croustifresh | 0.5% (ofw) |
| Salt | 1.5% (ofw) |
| Water | 60% (ofw) |

Wheat extrudates (7% ofw) were added either before or at the end of mixing and mixed for another 180 turns
a. Mixing in a Diosna spiral mixer 300 turns slow and 1500 turns fast.
b. Portioning of 300 grams and form in oblong shaped dough
c. Proof covered for 30 min at ambient temperature
d. Molding in a baguette molder
e. Position on a French sticks baking plate
f. Proofing for 60 min at 32°C at 70% relative humidity
g. Cutting of the surface
h. Baking in a Miwe Deck oven for 22 min phase 1; 17 min, 230°C top - 240°C floor, 500 steam; phase 2; 5 min, 210°C top - 220°C floor, valve open

After 2 hours cooling the sticks were cut horizontally and evaluated (Figure 2). As one can observe the best result is obtained when the extrudates are mixed in at the end of mixing, although there is also an effect when they are mixed in at the beginning of mixing.

## Claims

1. Bakery product with an open crumb structure obtainable by a method comprising the following steps
a) providing a dough mixture wherein said dough mixture comprises 50 weight% to 65 weight% (ofw) of water, and said dough mixture comprises particles comprised of 2 weight% to 15 weight% (ofw) starch or starch derived products, wherein said particles comprised of starch or starch derived products have a particle size of 3 mm to 5 mm, and a particle density of between 60 g/L to 90 g/L,
b) mixing the particles present in said dough mixture through said dough mixture providing a homogenous dough mixture comprised of intact starch or starch derived products,
c) proofing of said homogenous dough mixture for 15 to 120 minutes, providing a proofed dough mixture,
d) baking of said proofed dough mixture in order to obtain the bakery product,
wherein the open crumb structure of the bakery products has a porosity of at least 10% coarse cell volume over the total volume of the bakery food.

2. Bakery product with an open crumb structure according to claim 1, wherein said particles comprised of starch or starch derived products are selected from grits, grain or cereals.

3. Bakery product with an open crumb structure according to any of claim 1 or 2, wherein said particles comprised of starch or starch derived products are comprised of wheat and/or maize.

4. Bakery product with an open crumb structure according to any of claim 1 to 3, wherein said particles comprised of starch or starch derived products are comprised of enzymes, preferably amylases, more preferably heat stable endo-amylases.

5. Bakery product with an open crumb structure according to any of claim 1 to 4, wherein said particles comprised of starch or starch derived products comprises of oils and/or fats.

6. Method for the production of bakery products with an open crumb structure according to any of claim 1 to 5, wherein the method comprises the steps of
a) providing a dough mixture wherein said dough mixture comprises 50 weight% to 65 weight% (ofw) of water, and said dough mixture comprises particles comprised of 2 weight% to 15 weight% (ofw) starch or starch derived products, wherein said particles comprised of starch or starch derived products have a particle size of 3 mm to 5 mm, and a particle density of between 60 g/L to 90 g/L,
b) mixing the particles present in said dough mixture through said dough mixture providing a homogenous dough mixture comprised of intact starch or starch derived products,
c) proofing of said homogenous dough mixture for 15 to 120 minutes, providing a proofed dough mixture,
d) baking of said proofed dough mixture in order to obtain the bakery product.

7. Method for the production of bakery products with an open crumb structure according to claim 6, wherein said particles comprised of starch or starch derived products are expanded by extrusion, gun puffing, vacuum expansion, or microwave heating, preferably by extrusion.

## Patentansprüche

1. Backware mit einer offenen Krumenstruktur, die durch ein Verfahren gewinnbar ist, das die folgenden Schritte aufweist:
a) Bereitstellen einer Teigmischung, wobei die Teigmischung 50 Gewichts-% bis 65 Gewichts-% Wasser aufweist, und wobei die Teigmischung Partikel aufweist, die 2 Gewichts-% bis 15 Gewichts-% Stärke oder aus Stärke abgeleitete Produkte umfassen, wobei die Partikel, die Stärke oder aus Stärke abgeleitete Produkte umfassen, eine Partikelgröße von 3 mm bis 5 mm und eine Partikeldichte zwischen 60 g/l und 90 g/l haben,
b) Mischen der in der Teigmischung vorhandenen Partikel durch die Teigmischung, wobei eine homogene Teigmischung bereitgestellt wird, die intakte Stärke oder aus Stärke abgeleitete Produkte umfasst,
c) 15 bis 120 Minuten lang Gehenlassen der homogenen Teigmischung, wobei eine gegangene Teigmischung bereitgestellt wird,
d) Backen der gegangenen Teigmischung, um die Backware zu gewinnen,
wobei die offene Krumenstruktur der Backwaren eine Porigkeit von wenigstens 10% grobem Zellvolumen über das Gesamtvolumen des Backlebensmittels hat.

2. Backware mit einer offenen Krumenstruktur nach Anspruch 1, wobei die Partikel, die aus Stärke oder aus Stärke abgeleitete Produkte umfassen, aus Grütze, Körnern oder Getreide ausgewählt werden.

3. Backware mit einer offenen Krumenstruktur nach Anspruch 1 oder 2, wobei die Partikel, die Stärke oder aus Stärke abgeleitete Produkte umfassen, Weizen und/oder Mais umfassen.

4. Backware mit einer offenen Krumenstruktur nach einem der Ansprüche 1 bis 3, wobei die Partikel, die Stärke oder aus Stärke abgeleitete Produkte umfassen, Enzyme, bevorzugt Amylasen, bevorzugter hitzebeständige Endo-Amylasen, umfassen.

5. Backware mit einer offenen Krumenstruktur nach einem der Ansprüche 1 bis 4, wobei die Partikel, die Stärke oder aus Stärke abgeleitete Produkte umfassen, Öle und/oder Fette umfassen.

6. Verfahren zur Herstellung von Backwaren mit einer offenen Krumenstruktur nach einem der Ansprüche 1 bis 5, wobei das Verfahren die folgenden Schritte aufweist:
a) Bereitstellen einer Teigmischung, wobei die Teigmischung 50 Gewichts-% bis 65 Gewichts-% Wasser aufweist, und wobei die Teigmischung Partikel aufweist, die 2 Gewichts-% bis 15 Gewichts-% Stärke oder aus Stärke abgeleitete Produkte umfassen, wobei die Partikel, die Stärke oder aus Stärke abgeleitete Produkte umfassen, eine Partikelgröße von 3 mm bis 5 mm und eine Partikeldichte zwischen 60 g/l und 90 g/l haben,
b) Mischen der in der Teigmischung vorhandenen Partikel durch die Teigmischung, wobei eine homogene Teigmischung bereitgestellt wird, die intakte Stärke oder aus Stärke abgeleitete Produkte umfasst,
c) 15 bis 120 Minuten lang Gehenlassen der homogenen Teigmischung, wobei eine gegangene Teigmischung bereitgestellt wird,
d) Backen der gegangenen Teigmischung, um die Backware zu gewinnen.

7. Verfahren zur Herstellung von Backwaren mit einer offenen Krumenstruktur nach Anspruch 6, wobei die Partikel, die Stärke oder aus Stärke abgeleitete Produkte umfassen, durch Extrusion, mit einer Puffkanone, durch Vakuumausdehnung oder durch Mikrowellenerhitzung, bevorzugt durch Extrusion, ausgedehnt werden.

## Revendications

1. Produit de boulangerie présentant une mie à structure ouverte pouvant être obtenue par un procédé comprenant les étapes suivantes :
a) de préparation d'un mélange de pâte dans lequel ledit mélange de pâte comprend de 50 % en poids à 65 % en poids (du poids de farine (ofw)) d'eau, et ledit mélange de pâte comprend des particules comportant de 2 % en poids à 15 % en poids (ofw) d'amidon ou de produits dérivés de l'amidon, dans lequel lesdites particules comportant de l'amidon ou des produits dérivés de l'amidon présentent une taille de particule de 3 mm à 5 mm et une densité de particules comprise entre 60 g/l et 90 g/l,
b) de mélange des particules présentes dans ledit mélange de pâte à travers ledit mélange de pâte formant un mélange de pâte homogène comportant de l'amidon ou des produits dérivés de l'amidon intacts,
c) de levée dudit mélange de pâte homogène pendant 15 à 120 minutes, formant un mélange de pâte levée,
d) de cuisson au four dudit mélange de pâte levée afin d'obtenir le produit de boulangerie, dans lequel la mie à structure ouverte des produits de boulangerie présente une porosité supérieure ou égale à 10% du volume de cellule brut sur le volume total du produit de boulangerie.

2. Produit de boulangerie présentant une mie à structure ouverte selon la revendication 1, dans lequel lesdites particules comportant de l'amidon ou des produits dérivés de l'amidon sont sélectionnées parmi des gruaux, des graines ou des céréales.

3. Produit de boulangerie présentant une mie à structure ouverte selon l'une quelconque des revendications 1 ou 2, dans lequel lesdites particules comportant de l'amidon ou des produits dérivés de l'amidon sont composées de blé et/ou de maïs.

4. Produit de boulangerie présentant une mie à structure ouverte selon l'une quelconque des revendications 1 à 3, dans lequel lesdites particules comportant de l'amidon ou des produits dérivés de l'amidon sont composées d'enzymes, de préférence, d'amylases, plus préférablement, d'endoamylases thermostables.

5. Produit de boulangerie présentant une mie à structure ouverte selon l'une quelconque des revendications 1 à 4, dans lequel lesdites particules comportant de l'amidon ou des produits dérivés de l'amidon comprennent des huiles et/ou des graisses.

6. Procédé de production de produits de boulangerie présentant une mie à structure ouverte selon l'une quelconque des revendications 1 à 5, dans lequel le procédé comprend les étapes de :
a) de préparation d'un mélange de pâte dans lequel ledit mélange de pâte comprend de 50 % en poids à 65 % en poids (ofw) d'eau, et ledit mélange de pâte comprend des particules comportant de 2 % en poids à 15 % en poids (ofw) d'amidon ou de produits dérivés de l'amidon, dans lequel lesdites particules comportant de l'amidon ou des produits dérivés de l'amidon présentent une taille de particule de 3 mm à 5 mm et une densité de particules comprise entre 60 g/l et 90 g/l,
b) de mélange des particules présentes dans ledit mélange de pâte à travers ledit mélange de pâte formant un mélange de pâte homogène comportant de l'amidon ou des produits dérivés de l'amidon intacts,
c) de levée dudit mélange de pâte homogène pendant 15 à 120 minutes, formant un mélange de pâte levée,
d) de cuisson au four dudit mélange de pâte levée afin d'obtenir le produit de boulangerie.

7. Procédé de production de produits de boulangerie présentant une mie à structure ouverte selon la revendication 6, dans lequel lesdites particules comportant de l'amidon ou des produits dérivés de l'amidon sont expansées par extrusion, soufflage au pistolet, expansion sous vide, ou chauffage par micro-ondes, de préférence, par extrusion.
